(19) Europäisches Patentamt / European Patent Office / Office européen des brevets

(11) **EP 4 432 161 A1**

(12) **EUROPEAN PATENT APPLICATION**

(43) Date of publication:
**18.09.2024 Bulletin 2024/38**

(21) Application number: **24163203.3**

(22) Date of filing: **13.03.2024**

(51) International Patent Classification (IPC):
**G06N 3/044** (2023.01)    **G06N 3/049** (2023.01)
**G06N 3/067** (2006.01)    **H04Q 11/00** (2006.01)

(52) Cooperative Patent Classification (CPC):
**G06N 3/049; G06N 3/044; G06N 3/0675;
H04Q 11/0067**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **16.03.2023 CN 202310267992**

(71) Applicant: **Nokia Solutions and Networks Oy
02610 Espoo (FI)**

(72) Inventors:
• HUANG, Xiao An
  Shanghai, 200000 (CN)
• ZHANG, Dong Xu
  Shanghai, 200129 (CN)
• HU, Xiao Feng
  Shanghai, 201200 (CN)
• ZHANG, Kai Bin
  Shanghai, 201204 (CN)

(74) Representative: **DREISS Patentanwälte PartG
mbB
Friedrichstraße 6
70174 Stuttgart (DE)**

(54) **DEVICES AND METHODS FOR RECURRENT SPIKING NEURAL NETWORK BASED EQUALIZATION AND DEMAPPING**

(57) Embodiments of the present disclosure relate to devices, methods, apparatus, and medium for recurrent spiking neural network based equalization and demapping. A first communication device is configured to: obtain at least one parameter for a recurrent spiking neural network at the first communication device, wherein the at least one parameter is generated based on channel condition information between the first communication device and a second communication device; configure the recurrent spiking neural network based on the at least one parameter; and perform equalization and demapping on a signal received from the second communication device based on the recurrent spiking neural network. In this way, embodiments of the present disclosure provide a method for recurrent spiking neural network based equalization and demapping, thereby implementing a solution of a low power consumption joint equalization and demapping.

EP 4 432 161 A1

**Description**

**FIELD**

Embodiments of the present disclosure generally relate to the field of communications, and more particularly to devices, methods, apparatus, and computer-readable medium for recurrent spiking neural network based equalization and demapping.

**BACKGROUND**

To meet the demand of emerging applications, such as fixed-mobile convergence for the fifth generation of mobile network and beyond it, high-speed access networks (such as Passive Optical Network (PON), wireless Local Area Network (WiFi) and cellular communication networks, etc.) are widely studied, e.g., a 100-Gbit/s/λ access network becomes the next priority for the passive optical network (PON) roadmap. For ultra-fast signals, equalization techniques have attracted extensive attention because such software-based algorithms can enable cost-effective and non-linear hardware devices for higher-class communications.
The conventional neural networks (NN), such as fully-connected NN (FCNN) and recurrent NN (RNN), require a high-power digital signal processing (DSP). Compared with the conventional NNs, recently many researchers focus on replacing the DSP in part with a lower-power analog neuromorphic frontend. One approach is analog spiking neural network (SNN) based neuromorphic, which is often regarded as the 3rd generation NN by imitating the basic functioning of the human brain. Further discussion is required on how to at least partially replace high-power DSP based on SNN to implement signal processing such as equalization, demapping.

**SUMMARY**

In general, embodiments of the present disclosure relate to devices, methods, apparatus, and computer-readable medium for communication.
In a first aspect, embodiments of the present disclosure provide a first communication device. The first communication device comprises at least one processor and at least one memory storing instructions. The instructions, when executed, cause the first communication device at least to: obtain at least one parameter for a recurrent spiking neural network at the first communication device, wherein the at least one parameter is generated based on channel condition information between the first communication device and a second communication device; configure the recurrent spiking neural network based on the at least one parameter; and perform equalization and demapping on a signal received from the second communication device based on the recurrent spiking neural network.
In a second aspect, embodiments of the present disclosure provide a second communication device. The second communication device comprises at least one processor and at least one memory storing instructions. The instructions, when executed, cause the second communication device at least to: receive, from a first communication device, channel condition information between the first communication device and the second communication device; generate, based on the channel condition information, at least one parameter for the recurrent spiking neural network at the first communication device, wherein the recurrent spiking neural network is used by the first communication device to perform equalization and demapping on a signal received from the second communication device; and transmit, to the first communication device, the at least one parameter.
In a third aspect, embodiments of the present disclosure provide a method for communication. The method comprises: obtaining, at a first communication device, at least one parameter for the recurrent spiking neural network at the first communication device, wherein the at least one parameter is generated based on the channel condition information between the first communication device and a second communication device; configuring the recurrent spiking neural network based on the at least one parameter; and performing equalization and demapping on a signal received from the second communication device based on the recurrent spiking neural network.
In a fourth aspect, embodiments of the present disclosure provide a method for communication. The method comprises: receiving, at a second communication device from a first communication device, channel condition information between the first communication device and the second communication device; generating, based on the channel condition information, at least one parameter for a recurrent spiking neural network at the first communication device, wherein the recurrent spiking neural network is used by the first communication device to perform equalization and demapping on a signal received from the second communication device; and transmitting, to the first communication device, the at least one parameter.
In a fifth aspect, embodiments of the present disclosure provide apparatus for communication. The apparatus comprises means for: obtaining at least one parameter for the recurrent spiking neural network at a first communication device, wherein the at least one parameter is generated based on the channel condition information between the first communication device and the second communication device; configuring the recurrent spiking neural network based on the at least one parameter; and performing equalization and demapping on a signal received from the second communication device based on the recurrent spiking neural network.

In a sixth aspect, embodiments of the present disclosure provide apparatus for communication. The apparatus comprises means for: receiving, from a first communication device, channel condition information between the first communication device and a second communication device; generating, based on the channel condition information, at least one parameter for a recurrent spiking neural network at the first communication device, wherein the recurrent spiking neural network is used by the first communication device to perform equalization and demapping on a signal received from the second communication device; and transmitting, to the first communication device, the at least one parameter.

In a seventh aspect, embodiments of the present disclosure provide computer readable storage medium. The computer readable storage medium comprises program instructions which, when executed by an apparatus, cause the apparatus to perform any of the methods according to the third or fourth aspect described above.

In an eighth aspect, embodiments of the present disclosure provide a computer program. The computer program comprises instructions which, when executed by an apparatus, cause the apparatus to perform any of the methods according to the third or fourth aspect described above.

In a ninth aspect, embodiments of the present disclosure provide a first communication device. The first communication device comprises: obtaining circuitry configured to obtain at least one parameter for a recurrent spiking neural network at the first communication device, wherein the at least one parameter is generated based on channel condition information between the first communication device and a second communication device. The first communication device further comprises: configuring circuitry configured to configure the recurrent spiking neural network based on the at least one parameter. The first communication device further comprises: performing circuitry configured to perform equalization and demapping on the signal received from the second communication device based on the recurrent spiking neural network.

In a tenth aspect, embodiments of the present disclosure provide a second communication device for communication. The second communication device comprises: receiving circuitry configured to receive, from a first communication device, channel condition information between the first communication device and the second communication device. The second communication device further comprises: generating circuitry configured to generate, based on the channel condition information, at least one parameter for a recurrent spiking neural network at the first communication device, wherein the recurrent spiking neural network is used by the first communication device to perform equalization and demapping on a signal received from the second communication device. The second communication device further comprises: transmitting circuitry configured to transmit, to the first communication device, the at least one parameter.

It is to be understood that the content described in the summary section is not intended to limit the key or essential features of embodiments of the disclosure, nor is it intended to be used to limit the scope of the present disclosure. Other features of the present disclosure will become easily comprehensible through the following description.

## BRIEF DESCRIPTION OF THE DRAWINGS

Through the following detailed description with reference to the accompanying drawings, the above and other objectives, features, and advantages of example embodiments of the present disclosure will become more apparent. Throughout the drawings, the same or similar reference numerals represent the same or similar elements, in which:

FIG. 1 illustrates a schematic diagram of an example environment in which embodiments of the present disclosure may be implemented;

FIG. 2 illustrates a flowchart of an example method at a first communication device in accordance with some embodiments of the present disclosure;

FIG. 3 illustrates a signaling diagram of an example interaction process between a first communication device and a second communication device in accordance with some embodiments of the present disclosure;

FIG. 4 illustrates a schematic diagram of a recurrent spiking neural network (RSNN) in accordance with some embodiments of the present disclosure;

FIG. 5 illustrates a schematic principle diagram for implementing an RSNN-based joint equalizer and demapper in an optical communication network in accordance with some embodiments of the present disclosure;

FIG. 6 illustrates an example flowchart for implementing an RSNN-based joint equalizer and demapper in an optical communication network in accordance with some embodiments of the present disclosure;

FIG. 7 illustrates a schematic diagram of an example test environment in accordance with some embodiments of the present disclosure;

FIG. 8A illustrates a graph of a bit error rate corresponding to a spiking time step parameter in accordance with some embodiments of the present disclosure;

FIG. 8B illustrates a graph of a comparison of bit error rate of an RSNN-based method with conventional spiking neural network (SNN)-based and fully connected neural network (FCNN)-based methods in accordance with some embodiments of the present disclosure;

FIG. 9 illustrates a schematic diagram of a neuron outputting spikes within a spiking time step in accordance with some embodiments of the present disclosure;

FIG. 10 illustrates a schematic diagram of a hardware implementation of a recurrent leaky-integrate-and-fire (RLIF) neuron in accordance with some embodiments of the present disclosure;

FIG. 11 illustrates a flowchart of an example method at a second communication device in accordance with some embodiments of the present disclosure;

FIG. 12 illustrates a block diagram of a device that is suitable for implementing some embodiments of the present disclosure;

FIG. 13 illustrates a block diagram of an example computer readable medium in accordance with some embodiments of the present disclosure.

In the various figures, the same or similar reference numerals represent the same or similar elements.

## DETAILED DESCRIPTION OF EMBODIMENTS

Principle and spirit of the present disclosure will be described below with reference to a number of illustrative embodiments shown in the drawings. It is to be understood that these specific embodiments are described merely to enable those skilled in the art to better understand and implement the present disclosure, without suggesting any limitation to the scope of the present disclosure.

As used herein, the term "comprises" and its variants are to be read as open-ended terms that mean "comprises, but is not limited to." The term "based on" is to be read as "based at least in part on." The terms "one embodiment" and "the embodiment" are to be read as "at least one embodiment." The terms "first", "second" and so on can refer to same or different objects. The following text also can comprise other explicit and implicit definitions.

As used herein, the term "determining" encompasses a variety of actions. For example, "determining" can comprise computing, calculating, processing, deriving, investigating, looking up (e.g., looking up in a table, database, or another data structure), ascertaining, and the like. Further, "determining" can comprise receiving (e.g., receiving information), accessing (e.g., accessing data in a memory), etc. Further, "determining" can comprise parsing, selecting, choosing, establishing, etc.

As used herein, the term "circuitry" refers to one or more of the following: (a) hardware-only circuitry implementations (such as implementations in only analog and/or digital circuitry); and (b) combinations of hardware circuits and software, such as (as applicable): (i) a combination of analog and/or digital hardware circuit(s) with software/firmware, and (ii) any portions of hardware processor(s) with software (comprising digital signal processor(s), software, and memory(ies) that work together to cause an apparatus, such as an optical receiver or other computing device, to perform various functions); and (c) hardware circuit(s) and/or processor(s), such as a microprocessor(s) or a portion of a microprocessor(s), that requires software (e.g., firmware) for operation, but the software may not be present when it is not needed for operation.

The definition of circuitry applies to all uses of this term in this application, including in any claims. As a further example, the term "circuitry" as used herein also covers an implementation of merely a hardware circuit or processor (or multiple processors), or portion of a hardware circuit or processor, or its (or their) accompanying software or firmware. For example, the term "circuitry" also covers a baseband integrated circuit or a processor integrated circuit or a similar integrated circuit in an optical line terminal (OLT), optical network unit (ONU) or other computing device, if applicable to a particular claim element.

As used herein, the term "neural network" may be understood as a machine learning model. The model is able to learn from training data the association between the respective input and output, such that a given input is processed to generate a corresponding output based on the trained set of parameter values after the training is completed. A "neural network" may also sometimes be referred to as a "neural network model", "learning network", "learning model", "network", or "model", etc. These terms are used interchangeably herein.

Currently, neural network-based equalizers face some fundamental challenges that need to be addressed. For example, conventional neural network-based equalizers require high-power analog-to-digital converters (ADCs), comprising power-hungry ADC chips with very high sampling rates. However, power consumption reduction is an important concern in the current communication field. For example, relevant specifications of the International Telecommunication Union indicate that power consumption saving of telecommunication network systems has become an increasingly important issue, and it is also an important requirement that service quality and user experience should not be sacrificed. SNN-based nonlinear equalizers, as an emerging technology, are considered as low-power equalization tools to compensate for transmission impairments comprising linear and nonlinear distortions in the field of communications. In an SNN, spikes can be generated directly from the electrical signal emitted by the photodiode, thereby removing the power-hungry ADC.

For example, a hardware system based on an SNN, may serve as a nonlinear equalizer for a simulated short-reach optical communication, and the SNN may comprise an input layer, a hidden layer and an output layer, and a connection between the input layer and the hidden layer is defined by $W^{ih}$, and a connection between the hidden layer and the output layer is described by $W^{ho}$. The dynamics of a leaky-integrate-and-fire (LIF) spiking neuron in the hidden layer can be formulated as

$$\tau_m \frac{dV_m}{dt} = -V_m + I_{syn}(t) \tag{1}$$

where the $V_m$, $\tau_m$, and $I_{syn}(t)$ represents the membrane potential, the membrane time constant, and the current onto neuron caused by pre-synaptic events, respectively. Note that as the $V_m$ exceeds a threshold of $\vartheta$, the neuron will send out a spike of S(t) and then is set to a reset potential.

However, the bit error rate (BER) performance of an SNN with a medium neural network size may be poor, e.g., the BER performance may fail to meet a hard-decision forward error correction (HD-FEC) threshold when the nonlinearity and inter-symbol interference (ISI) of a 100 G PON using bandlimited optics (e.g., 25 GHz-class cost-effective optics) are pretty severe.

In addition, the performance of the SNN mostly depends on the large input data features, which greatly increases the application-specific integrated circuit (ASIC) hardware complexity by the complex weight matrix of $W^{ih}$ (where i and h are the input feature size and neural number of 1st hidden layer, respectively).

In view of this, embodiments of the present disclosure a new recurrent-SNN (RSNN) concept that can have superiorities in performance with the unique recurrent leaky-integrate-and-fire (RLIF) and recurrent leaky-integrate (RLI) neurons.

According to various embodiments of the present disclosure, a method for communication is presented. In the method, a first communication device may obtain at least one parameter for RSNN at the first communication device, the at least one parameter is generated based on channel condition information between the first communication device and a second communication device. The first communication device configures the RSNN based on the at least one parameter, and based on the RSNN, the first communication device performs equalization and demapping on signals received from the second communication device. In this way, a method of an RSNN-based joint equalization and demapping is provided. According to the channel condition in the communication network, capable of leveraging the equalization performance can be improved by leveraging a unique recurrent spiking structure, and the power consumption of the communication devices can be further reduced by removing the power-hungry ADC and generating the unique analog sparse spikes.

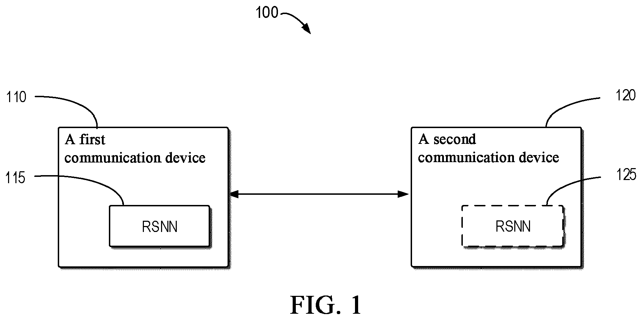

The principles and implementations of the present disclosure will be described in detail with reference to FIGS. 1-13. FIG.1 illustrates a schematic diagram of an example environment 100 in which embodiments of the present disclosure may be implemented. The environment 100 may comprise a first communication device 110 which may be an ONU in an optical communication network or a terminal equipment (UE) in a wireless communication network, etc. The first communication device 110 can be configured with an RSNN 115 for processing data (sometimes referred to as "downstream transmission" or "downstream data") from a second communication device 120.

The environment 100 can comprise a second communication device 120, which can be an OLT in an optical communication network or a network device in a wireless communication network, etc. Optionally, the second communication device 120 can be configured with an RSNN 125 for processing data (sometimes referred to as "upstream transmission" or "upstream data") from the first communication device 110. The first communication device 110 and the second communication device 120 may communicate with each other via one or more communication links/channels.

In some embodiments, RSNN 115 and 125 may implement an RSNN-based joint equalizer and demapper. With the unique recurrent spiking structure, the RSNN-based joint equalizer and demapper has better performance and lower power consumption than the conventional equalizer and demapper or the conventional algorithm.

It should be appreciated that the environment 100 can be a variety of communication systems. As one example, the environment 100 may be a "wireless communication network". In the present disclosure, the term "wireless communication network" refers to a network that complies with any suitable wireless communication standard, such as New Radio (NR), long Term Evolution (LTE), advanced LTE (LTE-A), wideband Code Division Multiple Access (WCDMA), high Speed Packet Access (HSPA), etc. A "wireless communication network" may also be referred to as a "wireless communication system". Further, communications between network devices, between a network device and a terminal device, or between terminal devices in the wireless communication network may be performed according to any suitable communication protocol comprising, but not limited to, global System for Mobile Communications (GSM), universal Mobile Telecommunications System (UMTS), long Term Evolution (LTE), new Radio (NR), wireless Local Area Network (WLAN) standards such as the IEEE 802.11 standard, and/or any other suitable wireless communication standard now known or to be developed in the future.

When the environment 100 is a wireless communication network, the first communication device 110 may be a "terminal device" and the second communication device 120 may be a "network device". Further, various modulation approaches, such as binary phase shift keying (BPSK), quadrature phase shift keying (QPSK), 16 quadrature amplitude modulation (16-QAM), or higher order modulation formats may be used in the environment 100.

In the present disclosure, the term "terminal device" refers to any terminal device capable of wireless communication. By way of example, and not limitation, a terminal device may also be referred to as a communication device, a user equipment (UE), a subscriber station (SS), a portable subscriber station, a mobile station (MS), or an access terminal (AT). Terminal devices may comprise, but are not limited to, mobile phones, cellular phones, smart phones, voice over IP (VoIP) phones, wireless local loop phones, tablets, wearable terminal devices, personal digital assistants (PDAs), portable computers, desktop computers, image capture terminal devices such as digital cameras, game terminal devices, music storage and playback devices, in-vehicle wireless terminal devices, wireless endpoints, mobile stations, laptop embedded devices (LEEs), laptop mounted devices (LMEs), USB dongles, smart devices, wireless customer premise equipment (CPE), and the like. In the following description, the terms "terminal device", "communication device", "terminal", "user equipment" and "UE" are used interchangeably. Furthermore, in an Internet of Things (IOT) scenario, a terminal device may represent a machine or other device that performs monitoring and/or measurements and transmits the results of such monitoring and/or measurements to another terminal device and/or network device. In this case, the terminal device may be a machine-to-machine (M2M) device, which may be referred to as a machine-type communication (MTC) device in the 3GPP context. As a particular example, the terminal device may be a UE implementing the 3GPP Narrowband Internet of Things (NB-IoT) standard. Examples of such machines or devices are sensors, metering devices (such as power meters), industrial machinery, or household or personal appliances, e.g., refrigerators, televisions, personal wearable devices (such as watches), etc. In other scenarios, the terminal device may represent a vehicle or other device capable of monitoring and/or reporting its operational status or other functionality associated with its operation.

In the present disclosure, the term "network device" refers to a node in a wireless communication network via which a terminal device accesses the network and receives services therefrom. The network device may refer to a base station (BS) or an access point (AP), e.g., a Node B (Node B or NB), an evolved Node B (eNodeB or eNB), an NR NB (also referred to as gNB), a remote radio unit (RRU), a radio header (RH), a remote radio header (RRH), a relay, a low power node (such as femto, pico, etc.), depending on the applied terminology and technology.

As another example, the environment 100 may be an optical communication network (such as a PON). When the environment 100 is an optical communication network, the first communication device 110 may be an ONU and the second communication device 120 may be an OLT.

In the present disclosure, the terms "optical network", "optical communication network", "passive optical network", "PON" refer to an optical distribution network (ODN) comprised of passive devices such as optical splitters and optical fibers without any active devices, comprising but not limited to Gigabit Passive Optical Networks (GPONs), 10 Gigabit Passive Optical Networks (XG-PONs), symmetric 10 Gigabit Passive Optical Networks (XGS-PONs), next Generation Passive Optical Networks (NG-PONs), and other optical communication networks now known or developed in the future.

In the present disclosure, the terms "optical line termination", "OLT" refer to a device in an optical network that serves an end user as a service provision node. The OLT may provide, for example, an electrical-to-optical conversion function to transmit signals out through optical fibers.

In the present disclosure, the terms "optical network unit", "ONU" refer to a client node connected to an OLT through an optical fiber to receive user data from the OLT.

It should be understood that the number of the first communication devices 110, the RSNN 115, the second network devices 120, the RSNN 125, and the connection relationships between them are for illustrative purposes only without suggesting any limitation. The environment 100 may comprise any suitable number of the first communication devices 110, the RSNN 115, the second network devices 120, the RSNN 125 suitable for implementing embodiments of the present disclosure.

It should also be appreciated that in some example embodiments, the RSNN 115 disposed at the first communication device 110 is discussed as an example, and that various example embodiments of the present disclosure are equally applicable to the RSNN 125 disposed at the second communication device 120. In other words, all discussion in this disclosure with respect to the first communication device 110 is equally applicable to the second communication device 120 unless explicitly stated to the contrary. Similarly, the entire discussion based on the second device 120 also applies to the first communication device 110.

Further, when training a neural network (e.g., a recurrent spiking neural network (RSNN) in embodiments of the present disclosure) is performed, it may be performed at either the first communication device 110, the second communication device 120, or even one or more devices other than the first communication device 110 and the second communication device 120, as the present disclosure is not limited thereto. In some embodiments, where the neural network is co-trained by multiple devices, the multiple devices may be located in the same geographical location, may be distributed over different geographical areas, or may be located at one or more clouds, respectively, as the present disclosure is not limited in this respect.

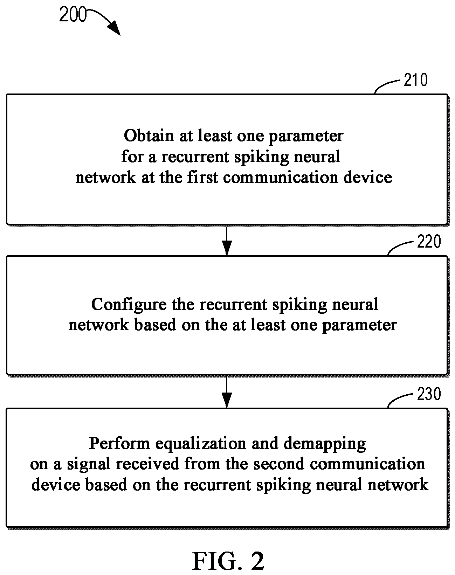

FIG. 2 illustrates a schematic diagram of an example method 200 at a first communication device in accordance with some embodiments of the present disclosure. To facilitate understanding, the method 200 will be described with reference to FIG. 1, the first communication device 110 and the second communication device 120 may be involved.

As shown in FIG. 2, at 210, the first communication device 110 obtains at least one parameter for the RSNN 115 at the first communication device 110, where the at least one parameter is generated based on channel condition information between the first communication device 110 and the second communication device 120.

In some embodiments, the first communication device 110 may locally generate the at least one parameter based on the channel condition information. The channel condition information may comprise a fiber length, a component bandwidth, a signal-to-noise ratio, received optical power, a signal-to-interference-plus-noise ratio, a received signal strength indicator, or a transmission rate between the first communication device 110 and the second communication device 120, etc.

At 220, the first communication device 110 configures the RSNN based on the at least one parameter. At 230, the first communication device 110 performs equalization and demapping on a signal received from the second communication device 120 based on the RSNN.

In some embodiments, the at least one parameter comprises a spiking time step parameter (e.g., which may be expressed as $T_s$) and a recurrent spiking weight parameter (e.g., which may be expressed as $\mathbf{W}^r$). The spiking time step parameter is used to configure a spiking response time step for neurons of the RSNN, and the recurrent spiking weight parameter is used to configure a weight applied to a recurrent spiking of a recurrent neuron among the neurons.

In some embodiments, the first communication device 110 may perform analog spiking encoding on the received signal at the input layer of the RSNN, based on the spiking time step parameter.

In some embodiments, the recurrent neuron comprises the recurrent leaky integrate and fire (RLIF) neuron in at least one hidden layer of the RSNN, and the recurrent leaky integrate (RLI) neuron in an output layer of the RSNN.

In some embodiments, the RSNN is used to implement a joint equalizer and demapper at the first communication device. In some embodiments, the first communication device 110 may perform equalization and demapping on the received signal using the RSNN-based joint equalizer and demapper.

In some embodiments, the first communication device 110 may transmit the channel condition information to the second communication device 120, prior to obtaining the at least one parameter. The first communication device 110 then receives the at least one parameter from the second communication device 120, which is generated by the second communication device 120 based on the channel condition information.

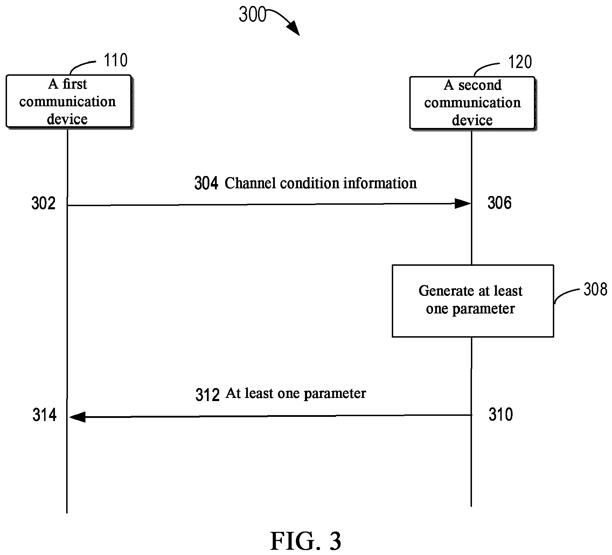

With the at least one parameter obtained from the second communication device, an example interaction process 300 between the first communication device 110 and the second communication device 120 is illustrated in FIG. 3. The first communication device 110 can transmit 302 channel condition information 304 between the first communication device and the second communication device to the second communication device 120 which receives 306 the channel condition information 304. Based on the channel condition information, the second communication device 120 generates 308 at least one parameter for RSNN at the first communication device 110. The RSNN is used by the first communication device 110 to perform equalization and demapping on signal(s) received from the second communication device 120. The second communication device 120 may transmit the at least one parameter to the first communication device 110.

The first communication device 110 may then configure the RSNN based on the at least one parameter received from the second communication device 120; and perform equalization and demapping on the signal received from the second communication device 120 based on the RSNN.

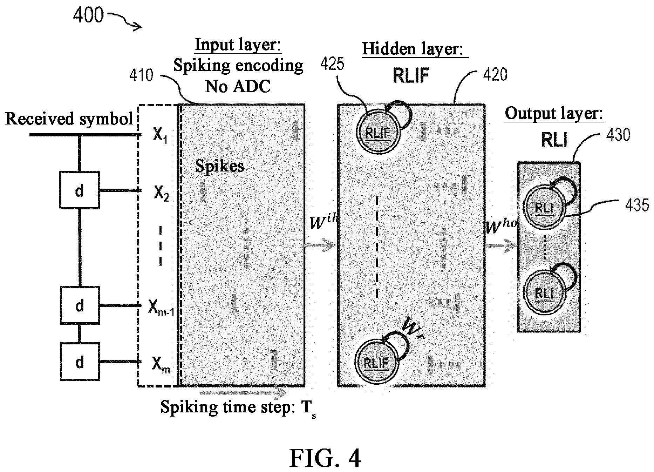

Referring to FIG. 4, which illustrates a schematic diagram of an RSNN 400 that may be RSNN 115 or RSNN 125 as shown in FIG. 1 and may implement a low-power joint equalizer and demapper in accordance with some embodiments of the present disclosure. As shown in FIG. 4, the RSNN 400 may comprise an input layer 410, a hidden layer 420, and an output layer 430, it being understood that the number of hidden layers is for illustrative purposes only and not to suggest any limitation, e.g., the RSNN 400 may comprise multiple hidden layers 420.

The RSNN 400 according to embodiments of the present disclosure is configured with the spiking time step parameter $T_s$ and the recurrent spiking weight parameter $W^r$. For example, the parameter $T_s$ may configure a spiking response time step for neurons of the RSNN 400, and the parameter $W'$ may configure a weight applied to a recurrent spiking of a recurrent neuron of the RSNN 400. The recurrent neuron includes a plurality of RLIF neurons 425 configured with the parameters $W^r$ and $T_s$ in the hidden layer 420, and a plurality of RLI neurons 435 configured with the parameters $W^r$ and $T_s$ in the output layer 430. The RSNN 400 can perform analog spiking encoding on received symbols at the input layer 410 using the parameter $T_s$, and a power-hungry ADC can be removed through the analog spiking encoding, thereby reducing device power consumption.

In some embodiments, the number of RLIF neurons 425 of the hidden layer 420 and RLI neurons 435 of the output layer 430 may be set to 40. It is understood that the number of the RLIF neurons 425 and the RLI neurons 435 is for illustrative purposes only and is not intended to suggest any limitation as to that the hidden layer 420 may comprise any number of RLIF neurons 425, and that output layer 430 may comprise any number of RLI neurons 435.

In some embodiments, the RSNN 400 may be configured at the first communication device 110 and the parameters $T_s$ and $W'$ may be generated based on channel condition information between the first communication device 110 and the second communication device 120, e.g., a fiber length, a component bandwidth, a signal-to-noise ratio, received optical power, a signal-to-interference-plus-noise ratio, a received signal strength indicator, or a transmission rate between the first communication device 110 and the second communication device 120, etc. In some embodiments, the parameters $T_s$ and $W'$ may be generated by the second communication device 120 based on the channel condition information reported from the first communication device 110, and then be obtained by the first communication device 110 from the second communication device 120. Alternatively or additionally, the parameters $T_s$ and $W'$ may be generated locally by the first communication device 110 based on channel condition information measured by the first communication device 110.

Unlike the formula (1) of the conventional LIF neuron dynamics, since the parameters $T_s$ and $W^r$ are configured, the dynamics of the RLIF neuron according to embodiments of the present disclosure can be formulated as:

$$\tau_m \frac{dV_m}{dt} = -V_m + I_{syn}(t) + \boldsymbol{W^r S(t-1)} \qquad (2)$$

where $W'$ represents the recurrent spiking weight parameter, $S(\bullet)$ represents the neuron outputting spikes, and $t$ represents the spiking time step parameter $T_s$.

The RSNN 400 according to embodiments of the present disclosure may implement a low-power joint equalizer and demapper that may be applied to devices in various communication systems, for example, a terminal device in a wireless communication system or an ONU of an optical communication system, etc.

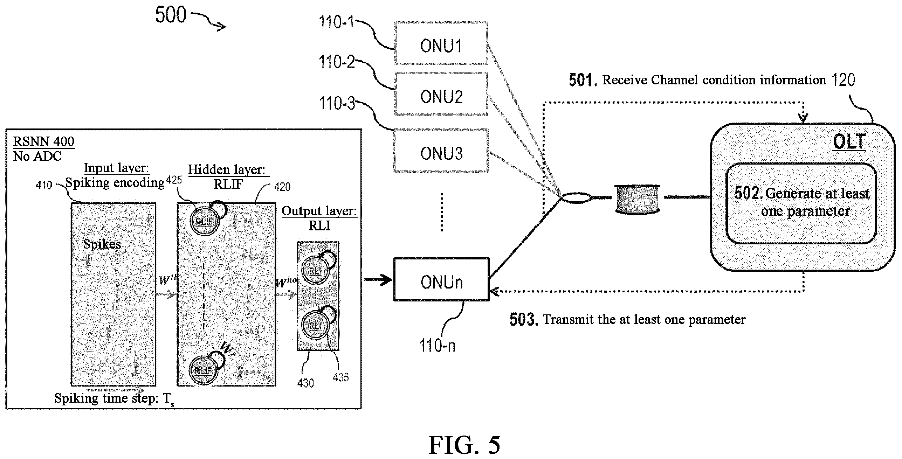

As an example, FIG. 5 illustrates a schematic principle diagram for implementing an RSNN-based joint equalizer and demapper in an optical communication network 500. As described above, the RSNN-based joint equalizer and demapper may also be applied to any suitable device in various communication systems.

As shown in FIG. 5, the optical communication network 500 may comprise first communication devices 110-1, 110-2, 110-3, ..., 110-n (collectively referred to as a first communication device 110 or ONU 110), where an ONU 110-n may represent an ONU newly accessing the optical communication network 500. The optical communication network 500 further comprises a second communication device 120, i.e., an OLT 120. The ONU 110 and the OLT 120 may communicate via an optical communication link (e.g., an optical fiber). The ONU 110 is configured with an RSNN 400-based joint equalizer and demapper.

As shown in FIG. 5, the OLT 120 may receive 501 from the ONU 110-n the channel condition information that indicates the channel condition between the ONU 110-n and the OLT 120, e.g., a fiber length, a component bandwidth, a signal-to-noise ratio, received optical power, etc.

If the ONU 110-n is newly accessed to the OLT 120 and the OLT 120 has never seen the ONU 110-n before, the OLT 120 may generate 502 at least one parameter for the RSNN 400 at the ONU 110-n based on the received channel condition information, for example, the at least one parameter may include the spiking time step parameter $T_s$ and the recurrent spiking weight parameter $W^r$.

The OLT 120 may then transmit 503 the generated at least one parameter to the ONU 110-n, so that the ONU 110-n may configure the RSNN 400 based on the at least one parameter and perform equalization and demapping on signal(s) received from the OLT 120 based on the RSNN 400. For example, the first communication device 110 can configure the RSNN 400 based on the at least one parameter to generate an RSNN-based joint equalizer and demapper, and perform equalization and demapping on the received signal.

It is noted that the first communication device 110 may also locally generate the at least one parameter for the RSNN 400 based on the measured channel condition information.

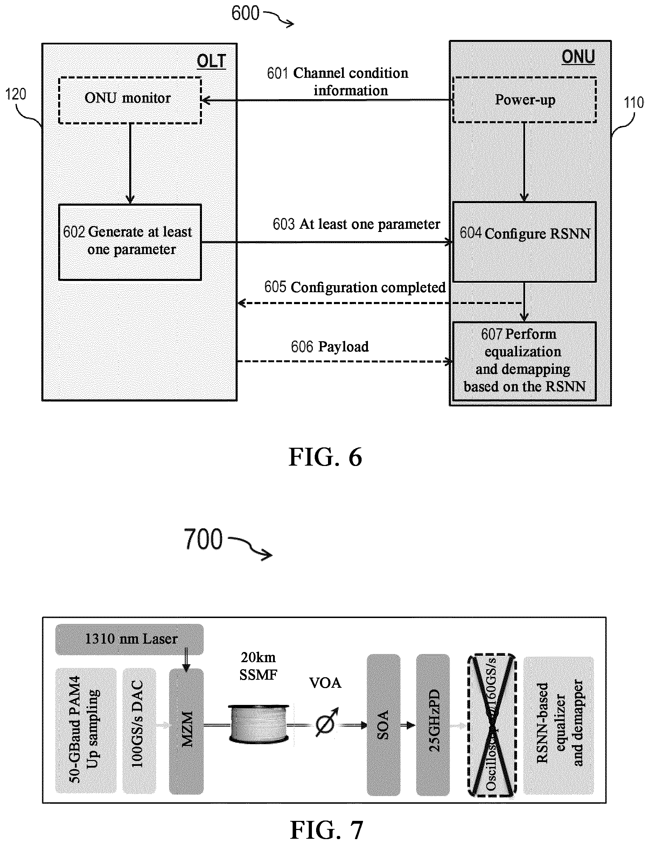

Referring to FIG. 6, an example flowchart 600 for implementing an RSNN-based joint equalizer and demapper in the optical communication network 500 is further illustrated. As shown in FIG. 6, upon power-up of the ONU 110, channel condition information 601 may be transmitted to the OLT 120, where the channel condition information 601 indicates channel conditions between the ONU 110 and the OLT 120, such as a fiber length, a component bandwidth, a signal-to-noise ratio, received optical power, etc.

The OLT 120 may continuously monitor the state of the ONU 110, and if the ONU 110 has newly accessed the OLT 120 and the OLT 120 has never seen the ONU 110 before, the OLT 120 may generate 602 at least one parameter for the RSNN at the ONU 110 using the received channel condition information 601 based on the RSNN method. For example, the at least one parameter may include the spiking time step parameter $T_s$ and the recurrent spiking weight parameter $W^r$.

The OLT 120 may then transmit the at least one parameter 603 to the ONU 110. Further, the ONU 110 can configure 604 the RSNN based on the at least one parameter 603. In the configured RSNN, sparse spikes output by the last hidden layer are input to the RLI neurons of the output layer. After the RSNN configuration is completed, the ONU 110 can transmit configuration completion information 605 to the OLT 120, so far, the ONU 110 can run the configured RSNN. After receiving payload 606 sent by the OLT 120, the ONU 110 can perform equalization and demapping on the received payload 606 based on the configured RSNN.

Reference is next made to FIGS. 7-9. A comparison of test results demonstrates that better communication performance (e.g., better bit error rate (BER), lower power consumption, etc.) can be achieved according to various embodiments of the present disclosure.

FIG. 7 illustrates a schematic diagram of an example test environment 700 in accordance with some embodiments of the present disclosure. For discussion purposes, the test environment 700 may represent a PAM4 based 100-Gb/s/λ intensity modulation and direct detection (IMDD) PON system.

In the test environment shown in FIG.7, the ONU and the OLT are connected via a standard single mode fiber (SSMF) of 20 km. On the OLT side, a distributed feedback (DFB) laser at 1310 nm is input and the data to be transmitted is sampled at a 50-GBaud PAM4. Then, the data is transmitted to the ONU side after being processed by a digital-to-analog converter (DAC) and a Mach Zehnder modulator (MZM). After 20-km SSMF transmission, a variable optical attenuator (VOA) is applied for receiver sensitivity measurement. The received signal is then processed by a semiconductor optical amplifier (SOA) and directly detected by a 25 GHz photodiode (PD).

The detected signal is then sampled by a digital sample oscilloscope (DSO) which would be removed due to the unique analog processing in embodiments of the present disclosure. Finally, the detected signals are processed offline. Offline processing includes the proposed RSNN-based equalizer and demapper. The offline processing comprises RSNN-based equalization and demapping. Therefore, using the RSNN-based joint equalizer and demapper of the present disclosure can omit the digital sampling step, remove the power-hungry ADC, and save the device power consumption.

It should be emphasized that the RSNN-based joint equalizer and demapper in the present disclosure can support one or multiple hidden layers, and also one or multiple outputs. The RSNN-based joint equalizer and demapper in the present disclosure can be implemented at the ONU side at very low-power consumption by removing the power-hungry ADC and generating the unique analog sparse spikes.

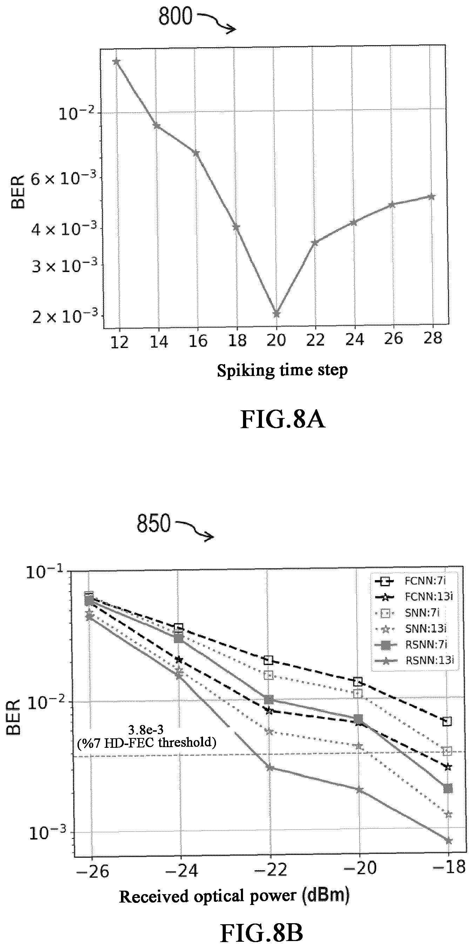

FIG. 8A illustrates a graph 800 of a bit error rate corresponding to a spiking time step parameter $T_s$ in accordance with some embodiments of the present disclosure. In our simulation and experiment, the data sets that is used to train and test are all Mersenne Twister-based random sequences. The length of the whole data sets is 100,000, comprising 40,000 and 60,000 symbols for training and testing, respectively. After deliberate consideration and detailed evaluations in the OLT, the special spiking $T_s$ can be configured as 20 with an optimal BER of 0.002, according to the measured channel condition, e.g. @-20dBm received optical power, as shown in FIG.8A. According to the spiking time step parameter $T_s$, the RSNN-based joint equalizer and demapper in the present disclosure would be trained at the OLT side.

FIG. 8B illustrates a graph 850 of a comparison of bit error rate of an RSNN-based method with conventional spiking neural network (SNN)-based and fully connected neural network (FCNN)-based methods. As can be seen from the comparison graph 850, the RSNN-based method in the present disclosure can achieve a much better performance than the conventional SNN-based and FCNN-based methods when the input feature size increases from 7i (squared) to 13i (starred). Note that only the RSNN-based method in the present disclosure with a small input size of 13 (i.e. 13i) can meet the HD-FEC threshold of bit error rate 3.8e-3 at -22dBm, targeting the 29-dB power budget requirement of PON system as the launch power was 8-dB in the test platform.

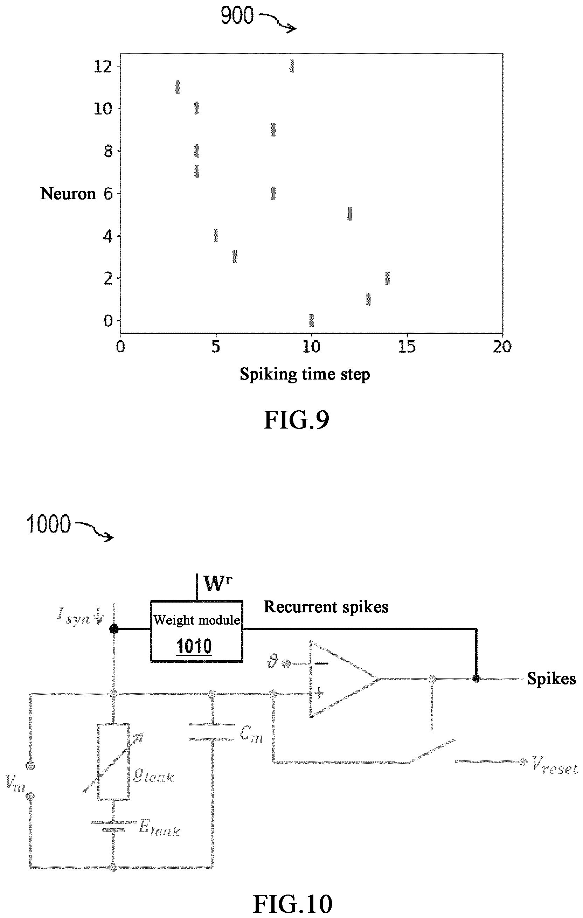

FIG. 9 illustrates a schematic diagram 900 of a neuron outputting spikes within a spiking time step. As shown in FIG. 9, only 1 spike for each neuron at long spiking time step of 20 in an input spiking encoding layer will be generated.

FIG. 10 illustrates a schematic diagram of a hardware implementation 1000 of an RLIF neuron in accordance with some embodiments of the present disclosure. In contrast to hardware implementations of conventional LIF neuron, the hardware implementation 1000 of the RLIF neuron in the present disclosure has a recurrent spiking structure, e.g., has a weight module 1010 configured with a recurrent spiking weight parameter $\mathbf{W^r}$. The hardware implementation 1000 of the RLIF neuron may be implemented in any suitable hardware, such as an electronic/photonic integrated circuit (EIC/PIC) chip.

According to various embodiments of the present disclosure, a recurrent spiking neural network configured with a spiking time step parameter $\mathbf{T_s}$ and a recurrent spiking weight parameter $\mathbf{W'}$ is provided that can achieve better BER performance than conventional SNN methods. For example, the RSNN method of the present disclosure can achieve a 29-dB power budget requirement of PON system. The RSNN method of the present disclosure can use unique analog spiking encoding, thereby removing the power-hungry ADC and reducing the power consumption of the device.

According to various embodiments of the present disclosure, a low-power RSNN-based joint equalizer and demapper is proposed, which can be used for high-speed access systems, such as flexible PON (FLCS PON), coherent systems, 5G+ (e.g., for signal processing), etc.

According to various embodiments of the present disclosure, a hardware implementation of an RLIF neuron is proposed, which can implement various hardware such as system on chip (SoC), EIC, PIC, etc., and can support a wide range of applications such as speech recognition, robot control, time series prediction, image processing, sensing, etc.

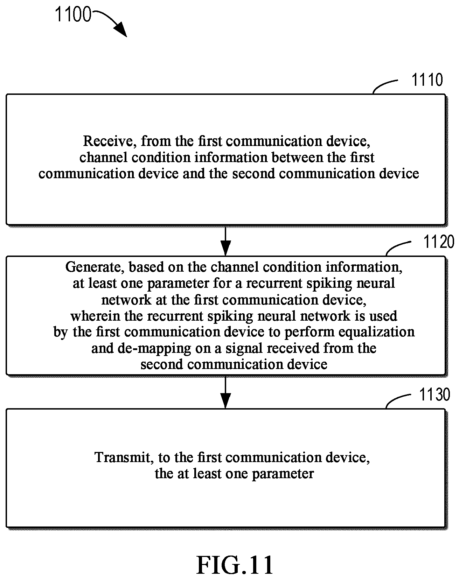

FIG. 11 illustrates a flowchart of an example method 1100 at a second communication device in accordance with some embodiments of the present disclosure. To facilitate understanding, the method 1100, which may involve the first communication device 110 and the second communication device 120, will be described with reference to FIGS. 1 and 3.

As shown in FIG. 11, at 1110, the second communication device 120 receives, from the first communication device 110, the channel condition information between the first communication device 110 and the second communication device 120. At 1120, based on the channel condition information, the second communication device 120 generates at least one parameter for the recurrent spiking neural network at the first communication device 110. The recurrent spiking neural network is used by the first communication device 110 to perform equalization and demapping on a signal received from the second communication device 120. At 1130, the second communication device 120 transmit, to the first communication device 110, the at least one parameter.

In some embodiments, the channel condition information may comprise: a fiber length, a component bandwidth, a signal-to-noise ratio, received optical power, a signal-to-interference-plus-noise ratio, a received signal strength indicator, or a transmission rate, etc. between the first communication device 110 and the second communication device 120.

In some embodiments, the at least one parameter comprises a spiking time step parameter (e.g., $\mathbf{T_s}$) and a recurrent spiking weight parameter (e.g., $\mathbf{W^r}$). The spiking time step parameter is used to configure a spiking response time step for neurons of the recurrent spiking neural network, and the recurrent spiking weight parameter is used to configure a weight applied to a recurrent spiking of a recurrent neuron among the neurons.

In some embodiments, the spiking time step parameter is used to perform analog spiking encoding on the received signal at the input layer of the recurrent spiking neural network. In some embodiments, the recurrent neuron comprises: an RLIF neuron in the at least one hidden layer of the recurrent spiking neural network, and an RLI neuron in the output layer of the recurrent spiking neural network.

In some example embodiments, the method 200 described above with reference to FIG. 2 may be performed by an apparatus comprising means for performing respective steps of the method 200. The means may be implemented in any suitable form. For example, the means may be implemented in a circuitry or software modules.

In some embodiments, the apparatus comprises means for: obtaining at least one parameter for a recurrent spiking neural network at the first communication device, wherein the at least one parameter is generated based on channel condition information between the first communication device and a second communication device; configuring the recurrent spiking neural network based on the at least one parameter; and performing equalization and demapping on a signal received from the second communication device based on the recurrent spiking neural network.

In some embodiments, the apparatus further comprises means for: transmitting the channel condition information to the second communication device prior to obtaining the at least one parameter. In some embodiments, the means for obtaining at least one parameter comprises means for: receiving, from the second communication device, the at least one parameter generated by the second communication device based on the channel condition information. In some embodiments, the means for obtaining at least one parameter comprises means for: generating the at least one parameter locally based on the channel condition information.

In some embodiments, the channel condition information comprises at least one of the following: a fiber length, a component bandwidth, a signal to noise ratio, received optical power, a signal-to-interference-plus-noise ratio, a received signal strength indicator, or a transmission rate.

In some embodiments, the at least one parameter comprises: a spiking time step parameter for configuring a spiking response time step for neurons of the recurrent spiking neural network and a recurrent spiking weight parameter for configuring a weight applied to a recurrent spiking of a recurrent neuron among the neurons.

In some embodiments, the apparatus further comprises means for: performing analog spiking encoding on the received signal at an input layer of the recurrent spiking neural network based at least on the spiking time step parameter.

In some embodiments, the recurrent neuron comprises: an RLIF neuron in at least one hidden layer of the recurrent spiking neural network, and an RLI neuron in an output layer of the recurrent spiking neural network. In some embodiments, the recurrent spiking neural network is used to implement a joint equalizer and demapper at the first communication device. In some embodiments, the means for performing equalization and demapping comprises means for: performing the equalization and demapping on the received signal using the joint equalizer and demapper.

In some embodiments, the apparatus also comprises means for performing other steps of the method 200 in some embodiments. In some embodiments, the apparatus comprises at least one processor; and at least one memory comprising a computer program code, the at least one memory and computer program code being configured to cause execution of the apparatus with at least one processor.

In some example embodiments, the method 1100 described above with reference to FIG. 11 may be performed by an apparatus comprising means for performing respective steps of the method 1100. The means may be implemented in any suitable form. For example, the means may be implemented in a circuitry or software modules.

In some embodiments, the apparatus comprises means for: receiving, from a first communication device, channel condition information between the first communication device and the second communication device; generating, based on the channel condition information, at least one parameter for a recurrent spiking neural network at the first communication device, wherein the recurrent spiking neural network is used by the first communication device to perform equalization and demapping on a signal received from the second communication device; and transmitting, to the first communication device, the at least one parameter.

In some embodiments, the channel condition information comprises at least one of the following: a fiber length, a component bandwidth, a signal to noise ratio, received optical power, a signal-to-interference-plus-noise ratio, a received signal strength indicator, or a transmission rate.

In some embodiments, the at least one parameter comprises: a spiking time step parameter for configuring a spiking response time step for neurons of the recurrent spiking neural network and a recurrent spiking weight parameter for configuring a weight to be applied to a recurrent spiking of a recurrent neuron of the neuron.

In some embodiments, the spiking time step parameter is used to perform analog spiking encoding on the received signal at an input layer of the recurrent spiking neural network. In some embodiments, the recurrent neuron comprises: an RLIF neuron in at least one hidden layer of the recurrent spiking neural network, and an RLI neuron in an output layer of the recurrent spiking neural network.

In some embodiments, the apparatus also comprises means for performing other steps of the method 1100 in some embodiments. In some embodiments, the apparatus comprises at least one processor; and at least one memory comprising computer program code, the at least one memory and computer program code being configured to cause execution of the apparatus with at least one processor.

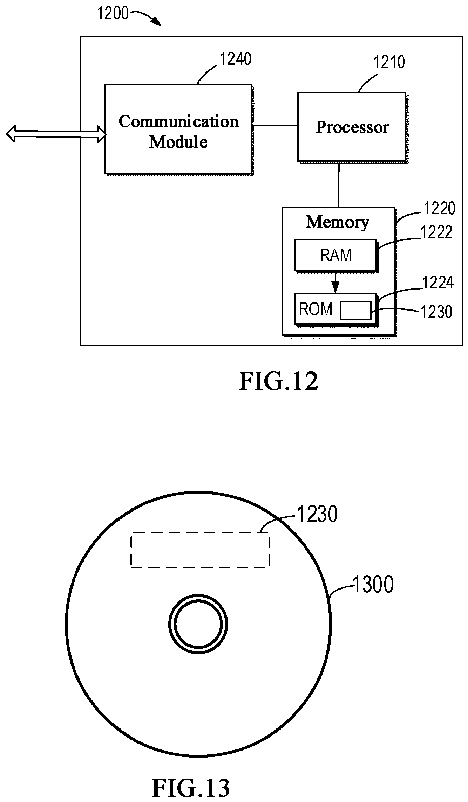

FIG. 12 illustrates a block diagram of a device 1200 suitable for implementing some embodiments of the present disclosure. The device 1200 may be implemented in the first communication device 110, the second communication device 120, a portion of the first communication device 110, or a portion of the second communication device 120. As shown in FIG. 12, the device 1200 includes at least one processor 1210, at least one memory 1220 coupled to the processor 1210, a communication module 1240 coupled to the processor 1210, and a communication interface (not shown) coupled to the communication module 1240. The memory 1220 stores at least a computer program 1230.

The communication module 1240 is for bidirectional communications. The communication module 1240 has at least one antenna to facilitate communication. The communication interface may represent any interface that is necessary for communication.

The processor 1210, upon executing instructions, causes the device 1200 to perform the relevant operations and features described above with reference to FIGS. 1-11. By way of example, any of the operations described with reference to FIG. 2, FIG. 3, or FIG. 11 may be performed on the first communication device 110 or the second communication device 120 by executing instructions. All of the features described above with reference to FIGS. 1-11 are applicable to the device 1200 and will not be described further herein.

The processor 1210 may be of any type suitable to the local technical environment and may include one or more of the following: general purpose computers, special purpose computers, microprocessors, digital signal controllers (DSPs), and processors based on a multicore processor architecture. The device 1200 may have multiple processors, such as an application specific integrated circuit chip that is slaved in time to a clock which synchronizes the main processor.

The memory 1220 may include one or more non-volatile memories and one or more volatile memories. Examples of non-volatile memories include, but are not limited to, a read-only memory (ROM) 1224, an electrically programmable read-only memory (EPROM), a flash memory, a hard disk, a compact disk (CD), a digital video disk (DVD), and other magnetic storage and/or optical storage. Examples of volatile memories include, but are not limited to, a random access memory (RAM) 1222 and other volatile memories that will not last in the power-down duration.

The computer program 1230 includes computer executable instructions that are executed by the associated processor 1210. The program 1240 may be stored in the ROM 1224. The processor 1210 may perform any suitable actions and processing by loading the program 1230 into the RAM 1222.

Embodiments of the present disclosure may be implemented by means of the program 1230 so that the device 1200 may perform any process of the disclosure as discussed with reference to FIGS. 1-11. Example embodiments of the present disclosure may also be implemented by hardware or a combination of software and hardware.

In some example embodiments, the program 1230 may be tangibly contained in a computer readable medium which may be included in the device 1200 (such as in the memory 1220) or other storage devices that are accessible by the device 1200. The device 1200 may load the program 1230 from the computer readable medium to the RAM 1222 for execution. The computer readable medium may include any types of tangible non-volatile storage, such as ROM, EPROM, a flash memory, a hard disk, CD, DVD, and the like. FIG. 13 illustrates an example of a computer readable medium 1300 in form of CD or DVD. The computer readable medium has the program 1230 stored thereon.

Generally, various example embodiments of the present disclosure may be implemented in hardware or special purpose circuits, software, logic, or any combination thereof. Some aspects may be implemented in hardware, while other aspects may be implemented in firmware or software which may be executed by a controller, microprocessor or other computing device. While various aspects of embodiments of the present disclosure are illustrated or described as block diagrams, flowcharts, or using some other pictorial representation, it is to be understood that the block, apparatus, system, technique or method described herein may be implemented in, as non-limiting examples, hardware, software, firmware, special purpose circuits or logic, general purpose hardware or controller or other computing devices, or some combination thereof.

The present disclosure also provides at least one computer program product tangibly stored on a non-transitory computer-readable storage medium. The computer program product includes computer-executable instructions, such as those included in program modules, being executed in a device on a target real or virtual processor, to carry out the method as described above with reference to FIGS. 2, 3, and 11. Generally, program modules include routines, programs, libraries, objects, classes, components, data structures, or the like that perform particular tasks or implement particular abstract data structures. In various example embodiments, the functionality of the program modules may be combined or split between the described program modules. Machine-executable instructions for program modules may be executed within a local or distributed devices. In a distributed device, program modules may be located in both local and remote storage media.

Computer program code for carrying out methods of the present disclosure may be written in one or more programming languages. These computer program codes may be provided to a processor of a general purpose computer, special purpose computer, or other programmable data processing apparatus, such that the program codes, when executed by the computer or other programmable data processing apparatus, cause the functions/operations specified in the flowchart and/or block diagram block or blocks to be performed. The program code may execute entirely on the computer, partly on the computer, as a stand-alone software package, partly on the computer and partly on a remote computer or entirely on the remote computer or server.

In the context of this disclosure, computer program code or related data may be carried on any suitable carrier to enable a device, an apparatus or a processor to perform the various processes and operations described above. Examples of the carrier include a signal, a computer readable medium, etc.

Examples of signals may include electrical, optical, radio, acoustical or other forms of propagated signals, such as carrier waves, infrared signals, etc.

The computer readable medium may be a computer readable signal medium or a computer readable storage medium. The computer-readable medium can include, but is not limited to, an electronic, magnetic, optical, electromagnetic, infrared, or semiconductor system, apparatus, or device, or any suitable combination thereof. More detailed examples of the computer-readable storage medium include an electrical connection with one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination thereof.

Further, while operations are depicted in a particular order, this should not be understood as requiring that such operations be performed in the particular order shown or in sequential order, or that all illustrated operations be performed, to achieve desirable results. In certain circumstances, multitasking or parallel processing may be advantageous. Likewise, while the above discussion contains certain specific implementation details, this should not be construed as limitations on the scope of any invention or claims, but rather as describing particular embodiments that may be directed to particular inventions. Certain features that are described in this specification in the context of separate embodiments may also be implemented in combination in a single embodiment. Conversely, various features that are described in the context of a single embodiment may also be implemented in multiple embodiments separately or in any suitable sub-combination.

Although the subject matter has been described in language specific to structural features and/or methodological acts, it is to be understood that the subject matter defined in the appended claims is not limited to the specific features or acts described above. Rather, the specific features and acts described above are disclosed as example forms of implementing the claims.

**Claims**

1. A first communication device (110) comprising:

   at least one processor; and
   at least one memory storing instructions that, when executed, cause the first (110) communication device at least to:

   obtain (210) at least one parameter for a recurrent spiking neural network at the first communication device (110), wherein the at least one parameter is generated based on channel condition information between the first communication device (110) and a second communication device (120);
   configure (220) the recurrent spiking neural network based on the at least one parameter; and
   perform (230) equalization and demapping on a signal received from the second communication device (120), based on the recurrent spiking neural network.

2. The first communication device (110) of claim 1, wherein the first communication device (110) is further caused to: transmit the channel condition information to the second communication device (120) prior to obtaining the at least one parameter.

3. The first communication device (110) of claim 2, wherein the first communication device (110) is caused to obtain the at least one parameter by:
   receiving, from the second communication device (120), the at least one parameter generated by the second communication device (120) based on the channel condition information.

4. The first communication device (110) of claim 1, wherein the first communication device (110) is caused to obtain the at least one parameter by:
   generating the at least one parameter locally based on the channel condition information.

5. The first communication device (110) of claim 1, wherein the channel condition information comprises at least one of the following:

   a fiber length,
   a component bandwidth,
   a signal to noise ratio,
   received optical power,
   a signal-to-interference-plus-noise ratio,
   a received signal strength indicator, or
   a transmission rate.

6. The first communication device (110) of claim 1, wherein the at least one parameter comprises a spiking time step parameter for configuring a spiking response time step for neurons of the recurrent spiking neural network and a recurrent spiking weight parameter for configuring a weight applied to a recurrent spiking of a recurrent neuron among the neurons.

7. The first communication device (110) of claim 6, wherein the first communication device (110) is further caused to:
   perform analog spiking encoding on the received signal at an input layer of the recurrent spiking neural network, based at least on the spiking time step parameter.

8. The first communication device (110) of claim 6, wherein the recurrent neuron comprises: a recurrent leaky integrate and fire (RLIF) neuron in at least one hidden layer of the recurrent spiking neural network, and a recurrent leaky integrate (RLI) neuron in an output layer of the recurrent spiking neural network.

9. The first communication device (110) of any of claims 1-8, wherein the recurrent spiking neural network is used to implement a joint equalizer and demapper at the first communication device (110), wherein for example the first communication device (110) is caused to perform the equalization and demapping by: performing the equalization and demapping on the received signal using the joint equalizer and demapper.

10. A second communication device (120) comprising:

at least one processor; and
at least one memory storing instructions that, when executed, cause the second communication device at least to:

receive (1110), from a first communication device (110), channel condition information between the first communication device (110) and the second communication device (120);
generate (1120), based on the channel condition information, at least one parameter for a recurrent spiking neural network at the first communication device (110), wherein the recurrent spiking neural network is used by the first communication device (110) to perform equalization and demapping on a signal received from the second communication device (120); and
transmit (1130), to the first communication device (110), the at least one parameter.

11. The second communication device (120) of claim 10, wherein the channel condition information comprises at least one of the following:

a fiber length,
a component bandwidth,
a signal-to-noise ratio,
received optical power,
a signal-to-interference-plus-noise ratio,
a received signal strength indicator, or
a transmission rate.

12. The second communication device (120) of claim 10, wherein the at least one parameter comprises a spiking time step parameter for configuring a spiking response time step for neurons of the recurrent spiking neural network and a recurrent spiking weight parameter for configuring a weight applied to a recurrent spiking of a recurrent neuron among the neurons,

wherein for example the spiking time step parameter is used to perform analog spiking encoding on the received signal at an input layer of the recurrent spiking neural network,
wherein for example the recurrent neuron comprises: a recurrent leaky integrate and fire, RLIF, neuron in at least one hidden layer of the recurrent spiking neural network, and a recurrent leaky integrate, RLI, neuron in an output layer of the recurrent spiking neural network.

13. A method for communication, comprising:

obtaining, at a first communication device (110), at least one parameter for a recurrent spiking neural network at the first communication device (110), wherein the at least one parameter is generated based on channel condition information between the first communication device (110) and a second communication device (120);
configuring the recurrent spiking neural network based on the at least one parameter; and
performing equalization and demapping on a signal received from the second communication device (120), based on the recurrent spiking neural network.

14. A method for communication, comprising:

receiving, at a second communication device from a first communication device (110), channel condition information between the first communication device (110) and the second communication device (120);
generating, based on the channel condition information, at least one parameter for a recurrent spiking neural network at the first communication device (110), wherein the recurrent spiking neural network is used by the first communication device (110) to perform equalization and demapping on a signal received from the second communication device (120); and
transmitting, to the first communication device (110), the at least one parameter.

**15.** An apparatus for communication, comprising means for:

obtaining at least one parameter for a recurrent spiking neural network at a first communication device (110), wherein the at least one parameter is generated based on channel condition information between the first communication device (110) and a second communication device (120);
configuring the recurrent spiking neural network based on the at least one parameter; and
performing equalization and demapping on a signal received from the second communication device (120), based on the recurrent spiking neural network.

**16.** An apparatus for communication, comprising means for:

receiving, from a first communication device (110), channel condition information between the first communication device (110) and a second communication device (120);
generating, based on the channel condition information, at least one parameter for a recurrent spiking neural network at the first communication device (110), wherein the recurrent spiking neural network is used by the first communication device to perform equalization and demapping on a signal received from the second communication device (120); and
transmitting, to the first communication device (110), the at least one parameter.

**17.** A computer readable medium (1300) comprising program instructions (1230) which, when executed by an apparatus, cause the apparatus to perform the method of any of claims 1 to 14.

100

| 110 | A first communication device | | 120 | A second communication device |
| 115 | RSNN | | 125 | RSNN |

FIG. 1

200

**210**

Obtain at least one parameter
for a recurrent spiking neural
network at the first communication device

**220**

Configure the recurrent spiking neural
network based on the at least one parameter

**230**

Perform equalization and demapping
on a signal received from the second communication
device based on the recurrent spiking neural network

# FIG. 2

FIG. 3

FIG. 4

FIG. 5

FIG. 6

FIG. 7

800 →

**FIG.8A**

850 →

**FIG.8B**

FIG.9

FIG.10

1100

1110

Receive, from the first communication device,
channel condition information between the first
communication device and the second communication device

1120

Generate, based on the channel condition information,
at least one parameter for a recurrent spiking neural
network at the first communication device,
wherein the recurrent spiking neural network is used
by the first communication device to perform equalization
and demapping on a signal received from the
second communication device

1130

Transmit, to the first communication device,
the at least one parameter

FIG.11

FIG.12

FIG.13

Europäisches
Patentamt

European
Patent Office

Office européen
des brevets

# EUROPEAN SEARCH REPORT

Application Number

EP 24 16 3203

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EIKE-MANUEL BANSBACH ET AL: "Spiking Neural Network Decision Feedback Equalization", ARXIV.ORG, CORNELL UNIVERSITY LIBRARY, 201 OLIN LIBRARY CORNELL UNIVERSITY ITHACA, NY 14853, 18 January 2023 (2023-01-18), XP091414823, * the whole document * ----- | 1-17 | INV. G06N3/044 G06N3/049 G06N3/067 H04Q11/00 |

TECHNICAL FIELDS SEARCHED (IPC)

G06N
H04Q

The present search report has been drawn up for all claims

| Place of search | Date of completion of the search | Examiner |
|---|---|---|
| The Hague | 18 July 2024 | Szymanski, Francois |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)